# EUROPEAN PATENT APPLICATION

(11) **EP 3 065 370 A1**
(43) Date of publication of application: **07.09.2016**
(21) Application number: 16000526.0
(22) Date of filing: 04.03.2016
(51) Int. Cl.: H04L 29/06

(54) **SYSTEMS AND METHODS FOR DECENTRALIZED USER AUTHENTICATION**

(30) Priority: 06.03.2015 US 201562129083 P; 01.03.2016 US 201615057222
(71) Applicant: Callsign, Inc, Los Altos, CA 94022 (US)
(72) Inventor: BRADLEY, James David Bacchus John, London E3 2FQ (GB); HAYAT, Zia, Surrey GU15 2JG (GB)
(74) Representative: v. Bezold & Partner Patentanwälte - PartG mbB

(57) **Abstract**

Systems and methods for decentralized user authentication for digital services, for example, in connection with user authentication for online services, are provided. A first mutual authentication is established between a decentralized authentication module and a first authentication server and a second mutual authentication is established between the decentralized authentication module and a second authentication server. The first mutual authentication includes exchanging security credentials between the first authentication server and the decentralized authentication module. The second mutual authentication is based on one or more second security credentials associated with the second authentication server. The decentralized authentication module generates first secure storage associated with the first authentication server responsive to the first mutual authentication and second secure storage associated with the second authentication server on the client device responsive to the second mutual authentication, the second secure storage non-overlapping with the first secure storage.

## Description

### TECHNICAL FIELD

The present disclosure relates generally to improved digital user authentication, and, in particular, to systems and methods for decentralized authentication and authorization for online services.

### BACKGROUND

Problems exist in the field of digital services, where user security is of utmost importance. Digital services can be any type of electronically supplied services, e.g., computer services, online services, internet services, mobile application services. Many online services require users to constantly identify themselves (e.g., prove they are who they say they are) as part of an authentication process. A user authentication process can be part of an authentication and authorization process for permitting/denying access to an electronic resource. For example, many digital services require users to enter a username and password before the user can access the service. This means that users have to manage multiple online username and password combinations, which can be unwieldy for the user. Some digital authentication systems re-use one set of username and password credentials across numerous digital services. These systems present a substantial risk in that, if the authentication system is compromised, the security of every online service relying on the authentication system is compromised. Once a digital username and password combination is exposed to the outside (e.g., to unapproved entities), it could lead to various security attacks and vulnerabilities for the online services using the authentication system. Accordingly, there is a need for systems and methods for decentralized authentication for reducing a risk of compromised security, including for use with authentication of digital services.

### SUMMARY

Embodiments of the present disclosure relate to systems, methods and non-transitory computer-readable storage media for decentralized user authentication. In one aspect, a first mutual authentication is established, over at least one network, between a decentralized authentication module of a client device and a first authentication server, the client device in communication with the first authentication server and a second authentication server via at least one network. In one aspect, the first mutual authentication comprises exchanging one or more first security credentials between the first authentication server and the decentralized authentication module. In one aspect, the decentralized authentication module generates first secure storage associated with the first authentication server on the client device responsive to the first mutual authentication. In one aspect, the second authentication server establishes, over at least one network, a second mutual authentication between the decentralized authentication module and the second authentication server, responsive to a second request from the decentralized authentication module and based on one or more second security credentials associated with the second authentication server, the one or more second security credentials provided by the first authentication server to the decentralized authentication module. In one aspect, the decentralized authentication module generates second secure storage associated with the second authentication server on the client device responsive to the second mutual authentication, the second secure storage non-overlapping with the first secure storage.

### BRIEF DESCRIPTION OF DRAWINGS

FIG. 1 is a functional block diagram of an example decentralized user authentication system, according to an aspect of the present disclosure.
FIG. 2 is a functional block diagram of an example decentralized user authentication system, according to an aspect of the present disclosure.
FIG. 3 is a signal flow diagram illustrating an example method for decentralized user authentication using the decentralized user authentication system shown in FIG. 1 or FIG. 2, according to an aspect of the present disclosure.
FIG. 4 is a signal flow diagram illustrating an example method for decentralized user authentication for a use request using the decentralized user authentication system shown in FIG. 1 or FIG. 2, according to an aspect of the present disclosure.
FIG. 5 is a functional block diagram of an example computer system, according to an aspect of the present disclosure.

### DETAILED DESCRIPTION

Embodiments of the present disclosure generally relate to systems and methods for decentralized user authentication for digital services, for example, in connection with user authentication for online services.

The term "computer" shall refer to any electronic device or devices, including those having capabilities to be utilized in connection with a decentralized authentication system, such as any device capable of receiving, transmitting, processing and/or using data and information. The computer may comprise a server, a processor, a microprocessor, a personal computer, such as a laptop, palm PC, desktop or workstation, a network server, a mainframe, an electronic wired or wireless device, such as for example, a telephone, a cellular telephone, a personal digital assistant, a smartphone, an interactive television, such as for example, a television adapted to be connected to the Internet or an electronic device adapted for use with a television, an electronic pager or any other computing and/or communication device specifically configured to perform one or more functions described herein.

The term "network" shall refer to any type of network or networks, including those capable of being utilized in connection with a decentralized authentication system described herein, such as, for example, any public and/or private networks, including, for instance, the Internet, an intranet, or an extranet, any wired or wireless networks or combinations thereof.

The term "user interface" shall refer to any suitable type of device, connection, display and/or system through which information may be conveyed to and received from a user, such as, without limitation, a monitor, a computer, a graphical user interface, a terminal, a screen, a keyboard, a touchscreen, a biometric input device that can include a microphone and/or camera, a telephone, a personal digital assistant, a smartphone, or an interactive television.

The term "computer-readable storage medium" should be taken to include a single medium or multiple media that store one or more sets of instructions. The term "computer-readable storage medium" shall also be taken to include any medium that is capable of storing or encoding a set of instructions for execution by the machine and that causes the machine to perform any one or more of the methodologies of the present disclosure.

The term "or" may be construed in an inclusive or exclusive sense. Similarly, the term "for example" may be construed merely to mean an example of something or an exemplar and not necessarily a preferred means of accomplishing a goal.

A decentralized authentication system of the present disclosure offers new computer authentication systems based on decentralized authentication servers and distributed computer authentication functions distributed over one or more authentication servers and modules on client devices, so as to effectively and securely provide user authentication while reducing a risk of compromised security of the system. Previous solutions were limited to centralized authentication systems based on re-using one set of username and password credentials across numerous computers or online services. The re-use of one set of username and password credentials presents substantial risks of compromised computer security because (among other things) if the authentication server containing the credentials is compromised (e.g., hacked into), every digital or online service relying on the credentials is affected. The decentralized authentication system of this disclosure is able to (among other things) distribute authentication functions over more than one server and a client device, provide separate, non-overlapping authentication techniques (e.g., by using separate, non-overlapping cryptographic keys and secure non-overlapping storage on a client device), and provide primary and back-up authentication servers, thereby reducing a risk of compromised security of the computer system.

For example, if one set of cryptographic keys (e.g., for one online service) in systems of the present disclosure is compromised, none of the other sets of cryptographic keys (e.g., for other online services) are necessarily compromised. This is because each set of cryptographic keys are kept different, separate and/or non-overlapping from each other. Importantly, organizations (e.g., a group of people with a particular purpose, e.g., a business, charity, government department, educational institution, etc.) and or application owners (e.g., one or more persons within an organization responsible for each RP application) using systems of the present disclosure need confidence that information sent and received within the systems are never intercepted or changed, e.g., non-repudiation. The systems of the present disclosure accomplish these (and other) goals by using different, separate, and/or non-overlapping cryptographic keys to communicate between servers and a client device. In this way, the decentralized authentication systems of the present disclosure mitigate single point of failure risks held by previous computer authentication systems.

The solutions described herein utilize the power, speed and precision of a special purpose computer programmed to execute the algorithms described herein that is not a mere method of organization or which may be executed by a human in a plausible manner. Instead, the systems and methods described herein are necessarily rooted in computer technology in order to overcome a problem specifically arising in the realm of computer networks so as to provide an improvement in the functioning of a computer, computer system and/or computer network. For example, the computer authentication techniques and methods described herein (e.g., mutual authentication between computer servers and a client device, domain trust relationships between computer servers and a client device, cryptographic key generation and storage etc.) cannot be done by a human. These computer-centric authentication solutions are necessarily performed on computer systems using computer technology. In addition, by reducing a risk of compromised security, the solutions described herein reduce computer processing requirements of the system (e.g., random access memory (RAM) requirements, read-only memory (ROM) requirements, etc.) by reducing or eliminating the need for corrective functions in response to security breaches.

In addition, decentralized authentication systems of the present disclosure further address the computer-centric problem of using separate user credentials (e.g., username and password) - for each online service. The decentralized authentication systems of the present disclosure solve this problem by removing the need for separate credentials for each online service, allowing for the use of a single user credential (e.g., client device information, user pin, biometric information, and/or other authentication information) while maintaining a distributed security framework. In addition, the decentralized authentication systems of the present disclosure may not need to replicate user authentication information (e.g., authentication credentials) across multiple online platforms because the authentication information is already distributed down to a decentralized authentication module, providing for simplicity and user convenience as well as security within the authentication system.

Descriptions of embodiments of decentralized authentication systems of the present disclosure are provided below.

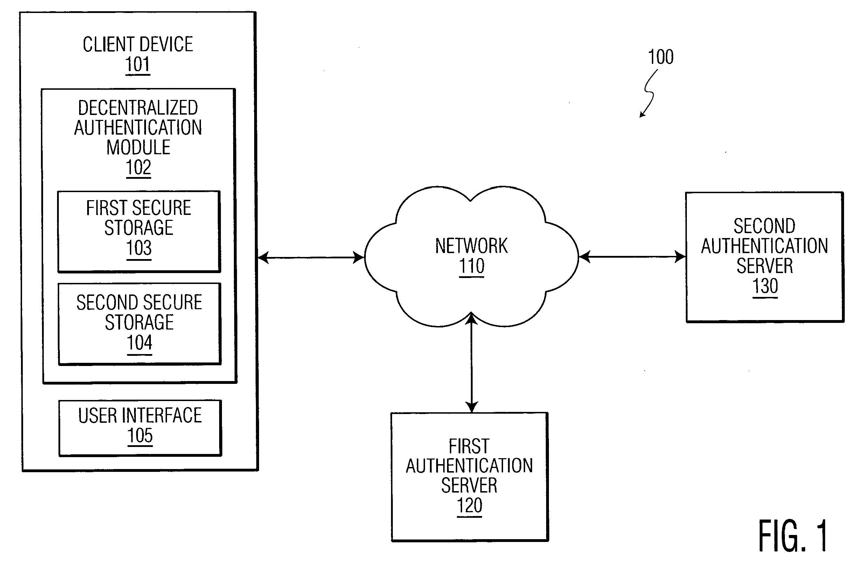

FIG. 1 is a functional block diagram of an example decentralized user authentication system (also referred to herein as system 100), according to aspects of the present disclosure. System 100 may include one or more client devices 101, one or more first authentication servers 120 and one or more second authentication servers 130. Client device 101 may be used by one or more users (not shown). Client device 101 may comprise one or more decentralized authentication modules 102 and one or more user interfaces 105. Decentralized authentication module 102 may create and/or comprise one or more first secure storages 103 and one or more second secure storages 104 on the device accessible by the module. For convenience, first secure storage 103 and second secure storage 104 is illustrated in FIG. 1 as being part of decentralized authentication module 102. System 100 may be configured to manage authentication functions between client device 101, first authentication server 120 and second authentication server 130. Client device 101, first authentication server 120 and second authentication server 130 may be communicatively coupled via network 110. Network 110 may include, for example, a private network (e.g., a local area network (LAN), a wide area network (WAN), intranet, etc.) and/or a public network (e.g., the Internet).

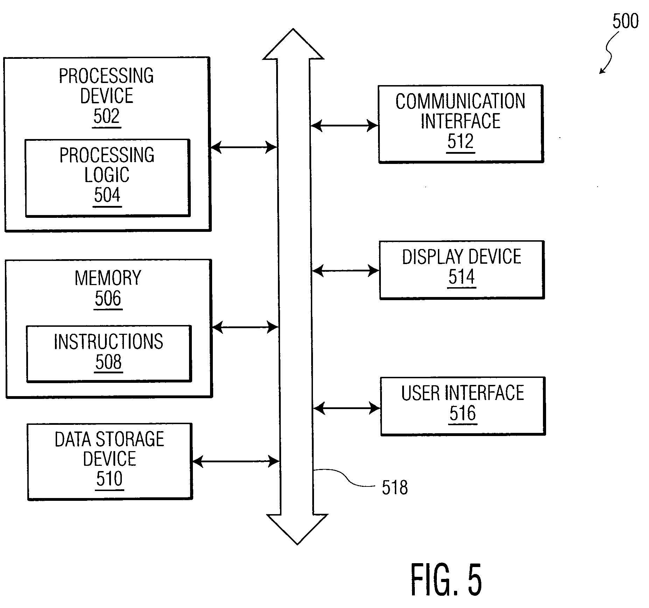

In one example, client device 101 may be represented by a computing device (such as computer system 500 shown in FIG. 5), including a non-transitory memory (e.g., memory 506 in FIG. 5) storing computer-readable instructions (e.g., decentralized authentication module 102) executable by a processing device (e.g., processing device 502 in FIG. 5) to perform one or more of the functions described herein. Client device 101 may be programmed via decentralized authentication module 102 to access first authentication server 120 and/or second authentication server 130 via network 110. Client device 101 may include any suitable computing device configured to store decentralized authentication module 102 and to include user interface 105. Client device 101 may comprise a desktop computer, a laptop, a smartphone, tablet, or any other specifically-configured computer.

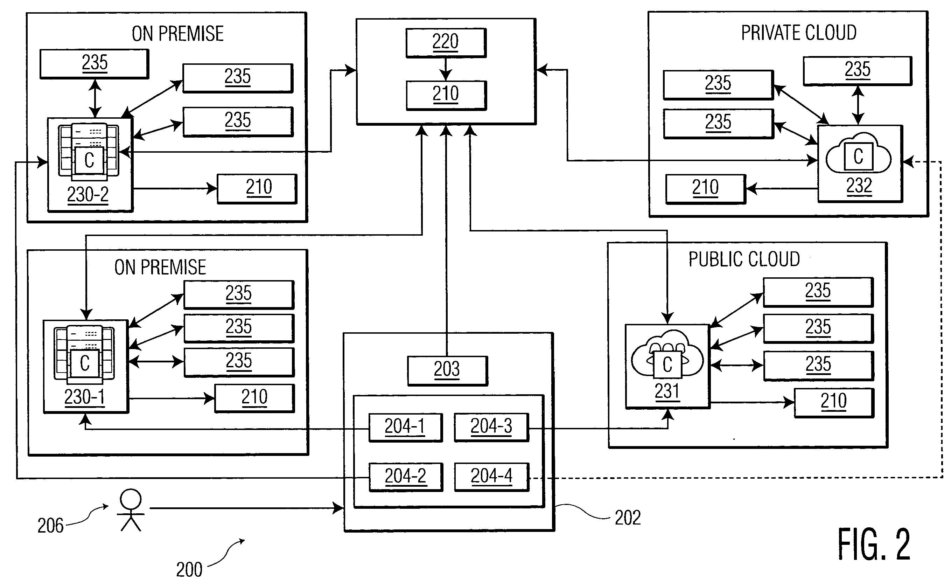

In some examples, one or more individuals and/or organizations may interact with decentralized authentication module 102, first authentication server 120 and/or second authentication server 130, for example, via a graphical user interface (not shown) displayed on any type of display device (not shown) including a computer monitor, a smart-phone screen, tablet, a laptop screen or any other device providing information to a user. For example, an individual and/or organization may interact with a second server 230-1 via an RP application 235 (described further below with respect to FIG. 2) using client device 101 or a separate device.

User interface 105 may include any suitable interface, such as a device-specific user interface (e.g., a display, an interactive touch display, a keyboard, a pointing device, a biometric device, a camera a microphone, etc.) and/or a web portal user interface (e.g., a web page) for performing authentication according to the functions described herein. Execution of decentralized authentication module 102 by a processor (e.g., processing device 502 shown in FIG. 5) of client device 101 may cause client device 101 to be transformed into a specially-purposed device configured to perform the functions described herein, including control of user interface 105 for interaction with a user for authentication functions via decentralized authentication module 102.

It should be understood that system 100 refers to a computing system having sufficient processing and memory capabilities to perform the following functions, and it does not necessarily refer to a specific physical location. In certain embodiments, the computing system may be distributed over several physical locations, connected by one or more wired and/or wireless links. An example computing system that may represent system 100 is described below with respect to FIG. 5. Each of client device 101, first authentication server 120 and second authentication server 130 generally refers to a computing system that may be distributed over one or several physical locations. In some examples, computing system 500 (FIG. 5) may represent client device 101, first authentication server 120 and/or second authentication server 130.

Decentralized authentication module 102 may, for example, request user data information (e.g., user name, password) and communicates it to the first authentication server 120 and/or the second authentication server 130. The first authentication server 120 and/or the second authentication server 130 compares the user data information to corresponding authentication information (e.g., cryptographic keys) in first secure storage 103 and/or second secure storage 104. For example, if the received information matches the stored authentication information, the user may be permitted to continue use of an application associated with the second authentication server 130.

Although not shown, in some examples, decentralized authentication module 102 may include a controller (e.g., a processor, a microcontroller, a circuit, software and/or other hardware component(s)) specially configured to control operation of decentralized authentication module 102 and/or user interface 105, as well as creation and management of first secure storage 103 and second secure storage 104.

Although FIG. 1 illustrates one client device 101, one first authentication server 120 and one second authentication server 130, it is understood that FIG. 1 represents an example embodiment of system 100, and that other arrangements of these elements are within the scope of the present disclosure. Thus, system 100 may include one or more client devices 101, one or more first authentication servers 120 and one or more second authentication servers 130. In some of the examples below, communication and interaction among client device 101, first authentication server 120 and second authentication server 130 are described. It is understood that such communication and interaction may be performed via public and/or private networks

(e.g., public and/or provide cloud networks). First and second authentication servers 120 and 130 may, in general, contain and manage user identities and provide authentication for those users. In some examples, first and second authentication servers 120 and 130 may also manage user groups. Examples of authentication servers 120 and 130 may include, without being limited to, authentication, authorization, and accounting (AAA) servers.

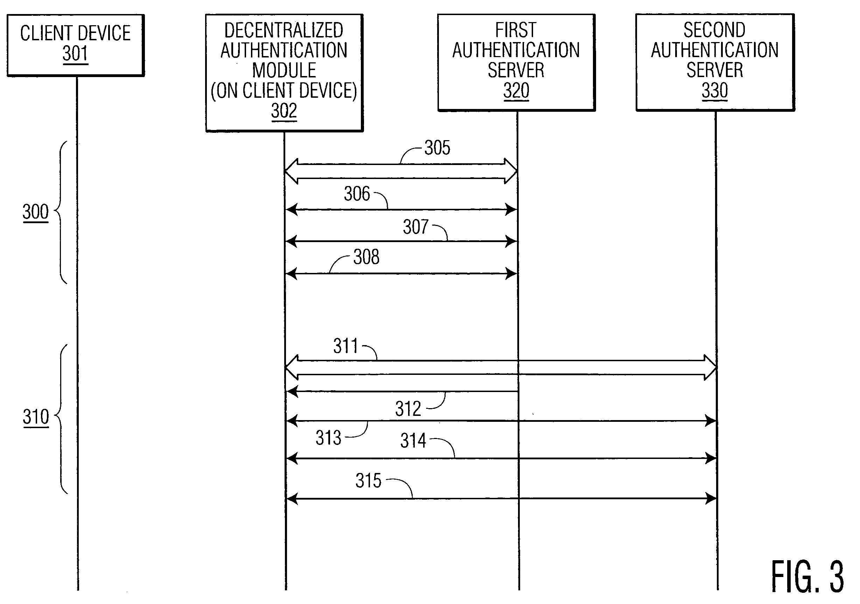

Those skilled in the art will appreciate that decentralized user authentication system 100 (or 200 shown in FIG. 2) may be configured to conduct the methods described herein with reference to FIGS. 3-4. As illustrated in FIG. 5, each of the corresponding methods may be performed by processing logic (such as processing logic 504 in FIG. 5) that may comprise hardware (e.g., circuitry, dedicated logic, programmable logic, microcode, etc.), software (such as instructions run on a processing device), or a combination thereof. In one embodiment, the methods shown in FIGS. 3-4 may be performed by one or more processing components associated with client device 101, first authentication server 120 (or server 220 shown in FIG. 2), and/or second authentication server 130 (one or more of servers 230-1, 230-2, 231 and 232 shown in FIG. 2) of decentralized user authentication system 100 (or system 200 shown in FIG. 2).

In the description below regarding FIGS. 3-4, it is assumed that a user and/or client (e.g., User 206 shown in FIG. 2) operates user interface 105 of client device 101 to communicate with decentralized authentication module 102, first authentication server 120 and/or second authentication server 130 via network 110. Client device 101 may communicate with the first and second authentication servers 120 and 130 via a web portal or a device application, by using specially purposed decentralized authentication module 102 (i.e., specially purposed software instructions). Accordingly, decentralized authentication module 102, stored in non-transitory memory on client device 101 (e.g., memory 506 shown in FIG. 5), may control operation of user interface 105 and communication with first and second authentication servers 120 and 130 via one or more networks. Decentralized authentication module 102 may include software running in a web browser of client device 101 to control a web portal and/or may include a device application controlling a device-specific user interface 105.

Some portions of the description herein describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in specialized software, firmware, specially-configured hardware or any combinations thereof.

Additionally, certain embodiments described herein may be implemented as logic or a number of modules, components, or mechanisms. A module, logic, component, or mechanism (collectively referred to as a "module") may be a tangible unit capable of performing certain operations and is configured or arranged in a certain manner. In certain exemplary embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor) to perform certain operations. A module may also comprise programmable logic or circuitry (e.g., as encompassed within a specially-purposed processor or other programmable processor) that is configured (e.g., temporarily) by software or firmware to perform certain operations.

Accordingly, the term module should be understood to encompass a tangible entity, be that an entity that is physically constructed, permanently configured (e.g., hardwired), or temporarily configured (e.g., programmed) to operate in a certain manner and/or to perform certain operations described herein. Considering embodiments in which modules or components are temporarily configured (e.g., programmed), each of the modules or components need not be configured or instantiated at any one instance in time. For example, where the modules or components comprise a specially purposed processor configured using software, the specially purposed processor may be configured as respective different modules at different times. Software may accordingly configure the processor to constitute a particular module at one instance of time and to constitute a different module at a different instance of time.

FIG. 2 is a functional diagram of an example decentralized authentication system 200, according to an aspect of the present disclosure. User 206 can interact with decentralized authentication module 202 via a user interface (e.g., user interface 105 in FIG. 1) of a client device (e.g., client device 101 in FIG. 1). In some examples, decentralized authentication module 202 can be implemented as? an authentication application on the client device. Decentralized authentication module 202 may be in communication with first authentication server 220 and one or more second authentication server (e.g, server 230-1, server 230-2, server 231 and/or server 232) via one or more networks (not shown).

Decentralized authentication module 202 may include an identifier (ID) core, e.g., a specialized software component that maintains a unique set of cryptographic keys for each authentication server, e.g., first authentication server 220 and each second authentication server (e.g., 230-1, 230-2, 231 and/or 232). To store securely store the different and unique cryptographic keys for the first and second authentication servers, decentralized authentication module 202 may create non-overlapping first secure storage 203 and second secure storage 204 (e.g., secure storage 204-1, secure storage 204-2, secure storage 204-3 and secure storage 204-4) on the client device. The ID core may also include a data mapping that maps the first and second authentication server identifier to the corresponding secure storage 203, 204. In this manner, first authentication server 220 is only associated with first secure storage 203, and each second authentication server (e.g., 230-1, 230-2, 231 and 232) is only associated with respective second secure storage 204 (i.e., 204-1, 204-2, 204-3 and 204-4, respectively). The separate, non-overlapping first and second secure storage 203, 204 are important for security reasons, e.g., if one secure storage is compromised, the other secure storage is not necessarily comprised.

First secure storage 203 can comprise a first cryptographic compartment. First secure storage 203 can store one or more first cryptographic keys in a first cryptographic compartment, the first cryptographic keys being associated with a first mutual authentication between the decentralized authentication module 202 and first authentication server 220.

Second secure storage 204 can comprise one or more second cryptographic compartments. Each second secure storage 204 can store one or more second cryptographic keys in the second cryptographic compartment associated with a second mutual authentication between decentralized authentication module 202 and the respective second authentication server (e.g., 230-1, 230-2, 231 or 232). The first cryptographic keys can be different and separate from the second cryptographic keys. Each second cryptographic compartment can hold second cryptographic keys that are different and separate from second cryptographic keys stored in the other second cryptographic compartments. Thus, secure storage 204-1 is associated with second server 230-1 and only stores second cryptographic keys associated with second server 230-1. Secure storage 204-2 is associated with second server 230-2 and only stores second cryptographic keys associated with second server 230-2. Secure storage 204-3 is associated with second server 231 and only stores second cryptographic keys associated with second server 231. Secure storage 204-4 is associated with second server 232 and only stores second cryptographic keys associated with second server 232. The separate, non-overlapping first and second cryptographic keys are important for security reasons, e.g., if one set of cryptographic keys is compromised, the other sets of cryptographic keys are not necessarily comprised.

First authentication server 220 can communicate with decentralized authentication module 202 and one or more of second authentication servers 230-1, 230-2, 231, 232 via one or more networks. First authentication server 220 can establish a mutual authentication, e.g., via SSL mutual authentication, and a domain trust relationship with decentralized authentication module 202. In some examples, the first authentication server 220 represents a central authentication server.

Each second authentication server (e.g., 230-1, 230-2, 231, 232) can communicate with decentralized authentication module 202 and first authentication server 220 via one or more networks. Second authentication server 230, 231 and/or 232 can establish a mutual authentication, e.g., via SSL mutual authentication, and a domain trust relationship with decentralized authentication module 202.

Second authentication server 230, 231 and/or 232 can communicate with a reliant party (RP) application 235 via one or more networks. An RP application, also known as a reliant party, can be an application that delegates its authentication or authorization needs to another service, e.g., to the second authentication server 230, 231 and/or 232. For example, an RP application can be a cloud service (e.g., Google^{®} Apps or Salesforce), an intranet application (e.g., a web based payroll system), or a classical service (e.g., a virtual private network (VPN) server), among other things. The second authentication server 230, 231 and/or 232 can be an instance, or clustered group of instances, that allow RP applications to send requests to the decentralized authentication module 202 via the client device (e.g., client device 101 shown in FIG. 1).

Second authentication server 230 can be an on-site (on premise) server. An on premise server can be an organization owner server hosting facility. Second authentication server 231 can be a public cloud server. A public cloud server can be a virtualized server hosting facility that is shared with other organizations (e.g., Amazon^{®} Web Services (AWS)). Second authentication server 232 can be a private cloud server. A private cloud server can be a virtualized server hosting facility that is not shared with other organizations (e.g., IBM^{®} managed hosting).

Each of the first authentication server 220 and second authentication server 230, 231 and/or 232 can include push notification services (PNS) 210. PNS 210 allows push notifications to be sent to one or more computers, e.g., mobile devices, via one or more networks. Exemplary PNS include Apple^{®} Push Notification Service (APNS) and Google^{®} Cloud Messaging (GCM).

FIG. 3 is a signal flow diagram illustrating an example method for decentralized user authentication using the decentralized user authentication system 100 shown in FIG. 1, according to an aspect of the present disclosure. In this example, a new user to system 100 (i.e., User X on client device 301) may request creation of an account via a web portal (or device application).

During a provisioning process 300, at step 305 a first mutual authentication is established between decentralized authentication module 302 and first authentication server 320, via at least one network. Establishing the first mutual authentication can comprise generating and exchanging one or more first security credentials (e.g., a public key, digital certificate) between the first authentication server 320 and the decentralized authentication module 302 at step 306. A digital certificate can be a cryptographically signed statement of authenticity, for example tied to a known and trusted public key infrastructure (PKI).

The first mutual authentication can be a mutual authentication handshake based upon one or more first security credentials associated with the first authentication server 320. The first mutual authentication can be based on information associated with at least one of a user (not shown) and the client device 101 provided to the first authentication server 320 by the client device 301. A mutual authentication handshake may be any kind of a two-way authentication by which client device 301 and/or decentralized authentication module 302 can validate that information sent to it can only have come from first authentication server 320 and/or second authentication server 330, and vice versa. In one aspect, the mutual authentication handshake can comprise Transport Layer Security (TLS) and/or Secure Sockets Layer (SSL) cryptographic protocols.

At step 307, a first trust relationship is established between decentralized authentication module 302 and first authentication server 320, via at least one network. The first trust relationship can comprise exchanging key material between decentralized authentication module 302 and first authentication server 320. A trust relationship can be a link between two or more different domains, for example where one domain honors the users of another domain and trusts the other domain to authenticate its client accounts. In one aspect, a trust relationship is established by a first domain (e.g., decentralized authentication module 302) permitting a second domain (e.g., first authentication server 320) to trust it and the second domain being set to trust the first domain. In another aspect, a trust relationship is established by creating an identical client account with administrative privileges on both domains.

Responsive to the first mutual authentication, decentralized authentication module 302 generates a first secure storage (e.g., 103 in FIG. 1) on the client device 301, the first secure storage associated with first authentication server 320. First secure storage 103 (FIG. 1) can store first cryptographic keys associated with the first mutual authentication. At step 308, first authentication server 320 and decentralized authentication module 302 generate and exchange the first cryptographic keys.

During a linking process 310, a second mutual authentication is established between decentralized authentication module 302 and second authentication server 330, via at least one network, at step 311. In one aspect, at step 312, a link is established by transmitting, by the first authentication server 320, one or more second security credentials associated with the second authentication server 330 to the decentralized authentication module 302. Establishing the link can comprise transmitting, by the first authentication server 320, one or more Uniform Resource Identifiers (URLs) associated with the second authentication server 330 to the decentralized authentication module 302.

In one aspect, to initiate linking process 310, a user visits an RP application (e.g., 235 in FIG. 2) on second authentication server 330 (e.g., via a laptop or other computing device not shown) and links a corporate identity to a user ID. The RP application can be, for example, an intranet portal owned by the user's organization. The RP application transmits a link request to first authentication server 320 requesting that the corporate identity and user ID be linked. The first authentication server 320 transmits the request to decentralized authentication module 302 on the client device 301, requesting approval of the link request. A user can approve the link request by, for example, entering a personal identification number (PIN), biometric, or other authentication technique via a user interface (e.g., 105 in FIG. 1). In one aspect, the PIN is generated via a PIN proofing process in which the user PIN is encrypted. The user's approval is transmitted to the first authentication server 320. In response, the first authentication server 320 transmits one or more URLs associated with the second authentication server 330 and/or one or more second security credentials associated with the second authentication server 330 to the decentralized authentication module 302.

The second mutual authentication (step 311) can be responsive to a second request (e.g., the link request) from decentralized authentication module 302 to second authentication server 330. Establishing the second mutual authentication can comprise generating and exchanging one or more second security credentials between the second authentication server 330 and the decentralized authentication module 302, at step 313. The second mutual authentication can be based on one or more second security credentials associated with the second authentication server 330 and provided by the first authentication server 320 to the decentralized authentication module 302. For example, the second mutual authentication can be a mutual authentication handshake based upon one or more second security credentials associated with the second authentication server 330. The mutual authentication handshake can be of the kind described herein, for example described in connection with the first mutual authentication.

At step 314, a second trust relationship is established between decentralized authentication module 302 and second authentication server 330, via at least one network. The second trust relationship can comprise exchanging key material between decentralized authentication module 302 and second authentication server 320. The trust relationship can be of the kind described herein, for example described in connection with the first trust relationship.

Responsive to the second mutual authentication, the decentralized authentication module 302 generates a second secure storage (e.g., 104 in FIG. 1) associated with second authentication server 330 on the client device 301. Second secure storage 104 can store second cryptographic keys associated with the second mutual authentication. At step 315, second authentication server 330 and decentralized authentication module 302 generate and exchange the second cryptographic keys.

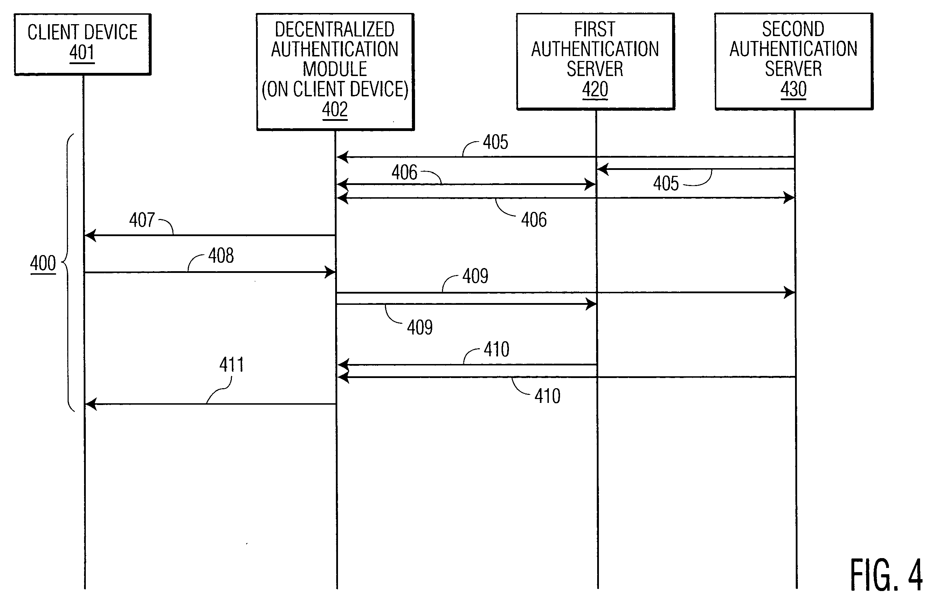

FIG. 4 is a signal flow diagram illustrating an example method for decentralized user authentication using the decentralized user authentication system 100 shown in FIG. 1, according to an aspect of the present disclosure. FIG. 4 illustrates an example use process 400 using, for example, system 100 (FIG. 1). In one aspect, use process 400 starts with a user attempting to log in to an RP application (e.g., 235 in FIG. 2) of second authentication server 430 via a computer device (e.g., a laptop) (not shown). The computer device informs the second authentication server 430 or the first authentication server 420 of the incoming user log in attempt. At step 405, second authentication server 430 or first authentication server 420 transmits a use request (e.g., based on the log in attempt) to the decentralized authentication module 402. In one aspect, the second authentication server 430 or the first authentication server 420 transmits a push notification via the PNS (e.g., 210 in FIG. 2) to the decentralized authentication module 402.

In one aspect, second authentication server 430 is configured to transmit the use request to the first authentication server 420 implemented under predetermined conditions. For example, in the event that the second authentication server 430 is undergoing repairs or is down, an application owner may wish to transfer functions performed by the second authentication server 430 to the first authentication server 420. In another aspect, an application owner may wish to apply a back-up strategy whereby one of the first authentication server 420 and the second authentication server 430 is used as a primary authentication server and the other server is used as a secondary (e.g., back-up) server, thereby enabling resiliency and redundancy within the system.

In one aspect, second authentication server 430 or first authentication server 420 sends a notification of an incoming use request to the decentralized authentication module 402 with a server ID associated with the second authentication server 430 or the first authentication server 420, respectively. At step 406, mutual authentication is established between the decentralized authentication module 402 and the server specified by the server ID, e.g., the second authentication server 430 or the first authentication server 420. In one aspect, the mutual authentication is established via second cryptographic keys (or first cryptographic keys) associated with the relevant second authentication server 430 (or first authentication server 420) stored in second secure storage (e.g., 104 in FIG. 1) (or first secure storage 103 in FIG. 1).

At step 407, the decentralized authentication module 402 provides a user authorization and authentication request on a user interface of the client device 401. The authorization and authentication request can be, for example, a request for a user PIN, biometric, or other authentication information or technique, etc. At step 408, the decentralized authentication module 402 receives a user authentication response to the authentication request, for example via user interface 105 (FIG. 1). At step 409, the decentralized authentication module 402 provides the user authentication response to at least one of the first authentication server 420 and the second authentication server 430. The server that received the user authentication response, e.g., the first authentication server 420 or the second authentication server 430, verifies the user authentication response. The verification can comprise an internal check that the user authentication is valid (e.g., that the user PIN and/or biometric is correct, that the decentralized authentication module 402 has not been tampered with, etc.).

At step 410, the first authentication server 420 or second authentication server 430 that received and verified the user authentication response sends an acknowledgement of receipt of the user authentication response to the decentralized authentication module 402. In one aspect, the decentralized authentication module 402 provides information to a user via a user interface (e.g., 105 in FIG. 1) of the client device 401 that an "approve" or "decline" response has been successfully sent to the relevant server. In this way, a user can be reassured that the user authentication response has been received by the relevant server.

At step 411, the decentralized authentication module 402 may provide feedback to a user via a user interface (e.g., 105 in FIG. 1) of the client device 401 regarding at least one of receipt of the user authentication response and verification of the user authentication response. For example, if the decentralized authentication module 402 failed to transmit the "approve" or "decline" response to the relevant server, the decentralized authentication module 402 prompts the user to retry authentication. If the decentralized authentication module 402 successfully transmitted the "approve" or "decline" response to the relevant server, the decentralized authentication module 402 prompts the user to check the service (e.g., website, application, etc.) the use request was initiated from and continue with the service. In one aspect, the relevant server consummates the use request (e.g., logs the user in), and shows a logged in state to the user (e.g., as a "logged in" website page on the relevant server).

In some aspects, steps performed by the second authentication server 430 during use process 400 described herein can be performed by the first authentication server 420 and vice versa.

Systems and methods of the present disclosure may include and/or may be implemented by one or more specialized computers including specialized hardware and/or software components. For purposes of this disclosure, a specialized computer may be a programmable machine capable of performing arithmetic and/or logical operations and specially programmed to perform the functions described herein. In some embodiments, computers may comprise processors, memories, data storage devices, and/or other specially-programmed components. These components may be connected physically or through network or wireless links. Computers may also comprise software which may direct the operations of the aforementioned components. Computers may be referred to with terms such as servers, personal computers (PCs), mobile devices, and other terms. It will be understood by those of ordinary skill that those terms used herein are interchangeable, and any special purpose computer capable of performing the described functions may be used.

Computers may be linked to one another via one or more networks. A network may be any plurality of completely or partially interconnected computers, wherein some or all of the computers are able to communicate with one another. It will be understood by those of ordinary skill that connections between computers may be wired in some cases (e.g., via wired TCP connection or other wired connection) or may be wireless (e.g., via a WiFi network connection). Any connection through which at least two computers may exchange data can be the basis of a network. Furthermore, separate networks may be able to be interconnected such that one or more computers within one network may communicate with one or more computers in another network. In such a case, the plurality of separate networks may optionally be considered to be a single network.

FIG. 5 illustrates a functional block diagram of a machine in the example form of computer system 500 within which a set of instructions for causing the machine to perform any one or more of the methodologies discussed herein may be executed. In some examples, the machine may be connected (e.g., networked) to other machines as described above. The machine may operate in the capacity of a server or a client machine in a client-server network environment, or as a peer machine in a peer-to-peer (or distributed) network environment. The machine may be any machine capable of executing a set of instructions (sequential or otherwise) that specify actions to be taken by that machine for performing the functions describe herein. Further, while only a single machine is illustrated, the term "machine" shall also be taken to include any collection of machines that individually or jointly execute a set (or multiple sets) of instructions to perform any one or more of the methodologies discussed herein. In some examples, first and second authentication servers 120 and/or 130 (FIG. 1) may be implemented by the example machine shown in FIG. 5 (or a combination of two or more of such machines). In some examples, client device 101 (FIG. 1) may be implemented by the example machine shown in FIG. 5.

Example computer system 500 may include processing device 502, memory 506, data storage device 510 and communication interface 512, which may communicate with each other via data and control bus 518. In some examples, computer system 500 may also include display device 514. In some examples, computer system 500 may include user interface 516.

Processing device 502 may include, without being limited to, a microprocessor, a central processing unit, an application specific integrated circuit (ASIC), a field programmable gate array (FPGA), a digital signal processor (DSP) and/or a network processor. Processing device 502 may be configured to execute processing logic 504 for performing the operations described herein. In general, processing device 502 may include any suitable special-purpose processing device or a processing device specially programmed with processing logic 504 to perform the operations described herein.

Memory 506 may include, for example, without being limited to, at least one of a read-only memory (ROM), a random access memory (RAM), a flash memory, a dynamic RAM (DRAM) and a static RAM (SRAM), storing computer-readable instructions 508 executable by processing device 502. In general, memory 506 may include any suitable non-transitory computer readable storage medium storing computer-readable instructions 508 executable by processing device 502 for performing the operations described herein. Although one memory device 506 is illustrated in FIG. 5, in some examples, computer system 500 may include two or more memory devices (e.g., dynamic memory and static memory).

Computer system 500 may include communication interface device 512, for direct communication with other computers (including wired and/or wireless communication) and/or for communication with network 110 (FIG. 1). In some examples, computer system 500 may include display device 514 (e.g., a liquid crystal display (LCD)). In some examples, computer system 500 may include user interface 516 (e.g., an alphanumeric input device, a touch sensitive display, a cursor control device, a loudspeaker, etc.).

In some examples, computer system 500 may include data storage device 510 storing instructions (e.g., software) for performing any one or more of the functions described herein. Data storage device 510 may include any suitable non-transitory computer-readable storage medium, including, without being limited to, solid-state memories, optical media and magnetic media.

While the present disclosure has been discussed in terms of certain embodiments, it should be appreciated that the present disclosure is not so limited. The embodiments are explained herein by way of example, and there are numerous modifications, variations and other embodiments that may be employed that would still be within the scope of the present invention.

## Claims

1. A system for decentralized user authentication to reduce a risk of compromised security, the system comprising:
a first authentication server;
a second authentication server; and
a client device comprising a decentralized authentication module, the client device in communication with the first authentication server and the second authentication server via at least one network,
the first authentication server executing computer-readable instructions that cause it to:
establish, over the at least one network, a first mutual authentication between the decentralized authentication module of the client device and the first authentication server, the first mutual authentication comprising exchanging one or more first security credentials between the first authentication server and the decentralized authentication module,
the decentralized authentication module, when executed, causes the client device to:
generate a first secure storage associated with the first authentication server on the client device responsive to the first mutual authentication,
the second authentication server executing computer-readable instructions to:
establish, over the at least one network, a second mutual authentication between the decentralized authentication module and the second authentication server, responsive to a second request from the decentralized authentication module and based on one or more second security credentials associated with the second authentication server, the one or more second security credentials provided by the first authentication server to the decentralized authentication module
the decentralized authentication module further causing the client device to:
generate a second secure storage associated with the second authentication server on the client device responsive to the second mutual authentication, the second secure storage non-overlapping with the first secure storage.

2. The system of claim 1, wherein:
the second authentication server executes computer-readable instructions to further cause it to:
transmit a use request to the decentralized authentication module, and
the decentralized authentication module causes the client device to:
cause a user authentication request to be provided on a user interface of the client device; and
receive a user authentication response responsive to the user authentication request,
wherein at least one of the first authentication server and the second authentication server executes instructions that further cause it to:
verify the user authentication response.

3. The system of claim 2, wherein the decentralized authentication module further causes the client device to:
provide feedback to a user via the user interface of the client device regarding at least one of receipt of the user authentication response and verification of the user authentication response.

4. The system of claim 1, wherein the first secure storage stores first cryptographic keys associated with the first mutual authentication, wherein the second secure storage stores second cryptographic keys associated with the second mutual authentication, and wherein the first cryptographic keys are different and separate from the second cryptographic keys.

5. The system of claim 4, wherein the client device communicates with the first authentication server based on the first cryptographic keys in the first secure storage and communicates with the second authentication server based on the second cryptographic keys in the second secure storage.

6. The system of claim 4, wherein the first mutual authentication comprises:
providing, by the client device, information associated with at least one of a user and the client device to the first authentication server;
establishing a first trust relationship between the decentralized authentication module and the first authentication server; and
generating and exchanging, between the first authentication server and the decentralized authentication module, the first cryptographic keys.

7. The system of claim 6, wherein the second mutual authentication comprises:
establishing a second trust relationship between the client device and the second authentication server; and
generating and exchanging, by the second authentication server and the decentralized authentication module, the second cryptographic keys.

8. The system of claim 2, wherein the second secure storage stores second cryptographic keys associated with the second mutual authentication, and
wherein the decentralized authentication module establishes further mutual authentication with the second authentication server via the second cryptographic keys.

9. The system of claim 1, wherein the one or more first security credentials associated with the first authentication server comprise a digital server certificate and the one or more second security credentials associated with the second authentication server comprise a digital server certificate.

10. The system of claim 1, wherein:
the second authentication server is at least one of an on-site server, a public cloud server, and a private cloud server.

11. The system of claim 2, wherein:
the second authentication server is executes computer-readable instructions to further cause it to transmit the use request to the first authentication server implemented under predetermined conditions.

12. A method for decentralized user authentication to reduce a risk of compromised security, the method comprising:
establishing, over at least one network, a first mutual authentication between a decentralized authentication module of a client device and a first authentication server, the client device in communication with the first authentication server and a second authentication server via the at least one network,
the first mutual authentication comprising exchanging one or more first security credentials between the first authentication server and the decentralized authentication module;
generating, by the decentralized authentication module, a first secure storage associated with the first authentication server on the client device responsive to the first mutual authentication;
establishing, by the second authentication server over the at least one network, a second mutual authentication between the decentralized authentication module and the second authentication server, responsive to a second request from the decentralized authentication module and based on one or more second security credentials associated with the second authentication server, the one or more second security credentials provided by the first authentication server to the decentralized authentication module; and
generating, by the decentralized authentication module, a second secure storage associated with the second authentication server on the client device responsive to the second mutual authentication, the second secure storage non-overlapping with the first secure storage.

13. The method of claim 12, further comprising:
transmitting, by the second authentication server, a use request to the decentralized authentication module;
causing, by the decentralized authentication module, a user authentication request to be provided on a user interface of the client device;
receiving, by the decentralized authentication module, a user authentication response responsive to the user authentication request; and
verifying, by at least one of the first authentication server and the second authentication server, the user authentication response.

14. The method of claim 13, further comprising:
providing, by the decentralized authentication module, feedback to a user via the user interface of the client device regarding at least one of receipt of the user authentication response and verification of the user authentication response.

15. The method of claim 12, wherein the first secure storage stores first cryptographic keys associated with the first mutual authentication, wherein the second secure storage stores second cryptographic keys associated with the second mutual authentication, and wherein the first cryptographic keys are different and separate from the second cryptographic keys.

16. The method of claim 15, wherein the first mutual authentication further comprises:
providing, by the client device, information associated with at least one of a user and the client device to the first authentication server;
establishing a first trust relationship between the decentralized authentication module and the first authentication server; and
generating and exchanging, between the first authentication server and the decentralized authentication module, the first cryptographic keys.

17. The method of claim 16, wherein the second mutual authentication further comprises:
establishing a second trust relationship between the decentralized authentication module and the second authentication server; and
generating and exchanging, between the second authentication server and the decentralized authentication module, the second cryptographic keys.

18. The method of claim 13, wherein the second secure storage stores second cryptographic keys associated with the second mutual authentication, and
wherein the decentralized authentication module establishes further mutual authentication with the second authentication server via the second cryptographic keys.

19. A non-transitory computer-readable storage medium programmed to include instructions that, when executed by one or more processing devices, cause the one or more processing devices to perform functions comprising:
establishing, over at least one network, a first mutual authentication between a decentralized authentication module of a client device and a first authentication server, the client device in communication with the first authentication server and a second authentication server via the at least one network,
the first mutual authentication comprising exchanging one or more first security credentials between the first authentication server and the decentralized authentication module;
generating, by the decentralized authentication module, a first secure storage associated with the first authentication server on the client device responsive to the first mutual authentication;
establishing, by the second authentication server over the at least one network, a second mutual authentication between the decentralized authentication module and the second authentication server, responsive to a second request from the decentralized authentication module and based on one or more second security credentials associated with the second authentication server, the one or more second security credentials provided by the first authentication server to the decentralized authentication module; and
generating, by the decentralized authentication module, a second secure storage associated with the second authentication server on the client device responsive to the second mutual authentication, the second secure storage non-overlapping with the first secure storage.

20. The non-transitory computer-readable storage medium of claim 19, wherein the functions further comprise:
transmitting, by the second authentication server, a use request to the decentralized authentication module;
causing, by the decentralized authentication module, a user authentication request to be provided on a user interface of the client device;
receiving, by the decentralized authentication module, a user authentication response responsive to the user authentication request; and
verifying, by at least one of the first authentication server and the second authentication server, the user authentication response.
